# EUROPEAN PATENT APPLICATION

(11) **EP 4 737 067 A1**
(43) Date of publication of application: **06.05.2026**
(21) Application number: 25830980.6
(22) Date of filing: 27.03.2025
(51) Int. Cl.: B25J 9/00, B25J 9/10

(54) **APPARATUS AND METHOD FOR ASSISTING MUSCULAR STRENGTH**

(30) Priority: 21.06.2024 KR 20240081379
(71) Applicant: Curexo, Inc., Seoul 05814 (KR)
(72) Inventor: KIM, Si Jin, Seoul 05814 (KR); HWANG, Sun Hee, Seoul 05814 (KR); KIM, Young Hwan, Seoul 05814 (KR)
(74) Representative: Lavoix
(86) International application number: PCT/KR2025/003937
(87) International publication number: WO 2025/263755

(57) **Abstract**

A muscle strength-assisting device and method are described. The device may include a first unit to be worn on a part of a user's body, a second unit to be worn on another part of the user's body, and a constant load-generating unit equipped with a constant load spring unit that is installed on the first unit and applies a constant load on the second unit. The method may include applying, by the first unit worn on the part of a user's body, the constant load on the second unit worn on the other part of the user's body, wherein the constant load-generating unit installed on the first unit applies the constant load on the user in response to a change in a relative distance between the first unit and the second unit or a change in a body shape according to the user's body movement.

## Description

### Technical Field

The present disclosure relates to a muscle strength-assisting device and method, and more particularly, to a device and method for assisting the erector spinae muscles of the upper body.

### Background Art

Various tasks that use muscle strength require various forms of physical load on workers. Any form or work that exceeds a worker's muscular limits may cause physical injury to the worker.

Wearable assistive suits for assisting the physical muscle strength generate assisting forces that help wearers perform tasks that are difficult to perform with normal muscle strength.

Passive-type suits have structures that simply support physical movements, and active-type suits have structures that generate amplified artificial forces that support body movements. The active types are not only structurally complex, but also expensive.

Existing passive wearable assistive suits also have complex structures, making it difficult to avoid interference with surrounding structures. Also, it is difficult to modify the support forces and maintain assisting forces constant according to a task being performed.

Therefore, it would be beneficial to develop a strength-assisting device that may be easy to wear, minimize interference with surrounding environmental factors when worn, and maintain constant determined assisting forces.

### Disclosure of Invention

### Technical Problem

The present disclosure provides a muscle strength-assisting device and method, which may be capable of being simply worn and minimize interference with external environmental factors.

The present disclosure provides a muscle strength-assisting device and method, which may adjust assisting forces in multiple stages and maintain a determined assisting force constant.

The present disclosure provides a muscle strength-assisting device and method, which may assist movements of the upper body muscles with assisting forces to protect the upper body muscles from excessive tension and excessive spinal curvature.

### Solution to Problem

According to one or more embodiments of the present disclosure, a muscle strength-assisting device includes
a first unit configured to be worn on a part of a user's body,
a second unit configured to be worn on another part of the user's body, and
a constant load-generating unit equipped with a constant load spring unit that is installed on the first unit and applies a constant load on the second unit.

According to one or more embodiments,
the constant load-generating unit may include a plurality of constant load spring devices for applying a multi-stage constant load, and
a coupling head that is selectively coupled to the second unit may be provided at one end of each of the constant load spring units.

According to one or more embodiments,
the constant load spring units may include a central spring unit and two outer spring units respectively disposed on both sides of the central spring unit.

According to one or more embodiments,
the two coupling heads provided at the spring ends of the two outer spring units, respectively, may be interconnected to each other by a bridge.

According to one or more embodiments,
a channel through which the coupling head of a central spring is placed or passes may be formed in the bridge.

According to one or more embodiments,
a seating portion may be formed in the channel to which the coupling head of a central spring is fixed.

According to one or more embodiments,
the first unit may be provided with a head mount portion equipped with a coupling bracket that provides a coupling space into which the coupling head is inserted with respect to a frame of the first unit, the coupling head being releasably fixed to the head mount portion, and
the coupling bracket may be provided with a locking device that performs, by an operating pin, pin fixation of the coupling head provided on each of the springs.

According to one or more embodiments,
the locking device may be a plunger-type locking device having a cylindrical body fixed to the coupling bracket, an operating pin that reciprocates with respect to the cylindrical body, and a handle connected to the operating pin.

According to one or more embodiments,
the first unit may be mounted on the user's waist, and the second unit may be mounted on the user's upper body.

A strength-assisting method according to the present disclosure includes
applying, by a first unit worn on a part of a user's body, a constant load on a second unit worn on another part of the user's body,
wherein a constant load-generating unit installed on the first unit may apply a constant load on the user in response to a change in a relative distance between the first unit and the second unit or a change in a body shape according to a user's body movement.

According to the method of one or more embodiments,
the constant load-generating unit may generate the constant load in multiple stages by a plurality of constant load springs drawn from a plurality of constant load spring units, and
the plurality of constant load springs may transmit the constant load to the second unit through a head mount portion provided on the second unit.

According to one or more embodiments,
the constant load-generating unit may apply a multi-stage adjustable constant load on the user's body through the second unit by the plurality of constant load spring units for multi-stage constant load application.

According to one or more embodiments, the constant load spring unit may generate the constant load by at least one selected from a central spring unit and two outer spring units disposed on both sides of the central spring unit.

According to the method of one or more embodiments,
the first unit may be configured to apply the constant load on the user's upper body, and
the second unit may hold the constant load-generating unit that generates the constant load on a user's waist part.

### Brief Description of Drawings

FIG. 1 is a schematic perspective view of a muscle strength-assisting device according to an embodiment.
FIG. 2 is a schematic perspective view of the strength-assisting device of the embodiment shown in FIG. 1, as viewed from the back.
FIG. 3 illustrates a detailed structure of a constant load-generating unit applied to a strength-assisting device according to an embodiment.
FIG. 4 is a partial perspective view showing the constant load-generating unit of the strength-assisting device shown in FIG. 3.
FIG. 5 illustrates a structure in which coupling heads of springs are provided independently according to another embodiment.
FIG. 6 is a schematic partial cross-sectional view of a state where a coupling head is coupled to a head mount portion according to an embodiment.
FIG. 7 illustrates a short-threaded index plunger that may be used as a locking device for a coupling head according to an embodiment.
FIG. 8 illustrates a strength-assisting device including a locking device according to another embodiment.
FIG. 9 is a partial perspective view showing a part of the locking device shown in FIG. 8 in more detail.
FIG. 10 illustrates a coupling head fixed to a head mount portion in a coupling space between a frame and a coupling bracket in the embodiment shown in FIGS. 8 and 9.
FIG. 11 illustrates a relationship between an actuating pin of a locking device and an elastic piece that elastically biases the actuating pin according to another embodiment, and
FIG. 12 illustrates a wearing state of the strength-assisting device according to the present disclosure as described above.

### Mode for Invention

Hereinafter, preferred embodiments of the present inventive concept are described in detail with reference to the accompanying drawings. However, the embodiments of the present inventive concept may be modified into various other forms, and the scope of the present inventive concept shall not be construed as being limited to the embodiments described below in detail. It is desirable that the embodiments of the present inventive concept be interpreted as being provided to more fully explain the present inventive concept to one of ordinary skill in the art. The same reference numerals denote the same elements throughout the present disclosure. Furthermore, various elements and areas in the drawings are schematically drawn. Therefore, the present inventive concept is not limited by the relative sizes or distances illustrated in the accompanying drawings.

Terms such as first, second, etc. may be used to describe various components, but the components are not defined by these terms. The terms are used only for distinguishing one element from another element. For example, without deviating from the scope of the claims of the present inventive concept, a first element may be referred to as a second element, and vice versa.

The terms used in the present application are used only for describing particular embodiments and are not intended to limit the present inventive concept. A singular expression may include a plural expression, unless an apparently different meaning is indicated in the context. In the present application, expressions such as "comprises" or "has" are intended to specify the presence of a feature, number, step, operation, component, part, or a combination thereof described in the specification, and should be understood not to pre-exclude the presence or addition of one or more other features, numbers, operations, components, parts, or combinations thereof.

Unless otherwise defined, all of the terms used herein including technical terms and scientific terms have the same meaning as the meaning commonly understood by one of ordinary skill in the art. Also, the terms commonly used and having the meanings as defined in dictionaries shall be understood to have consistent meanings with the corresponding terms in the context of relevant arts, and unless explicitly defined so herein, the meanings of the terms shall not be understood to be excessively formal.

In cases where an embodiment is otherwise feasible, specific process sequences may be performed in a different order than described. For example, two processes described sequentially may be performed substantially simultaneously, or may be performed in the reverse order from that described.

Hereinafter, strength-assisting devices according to one or more embodiments will be described.

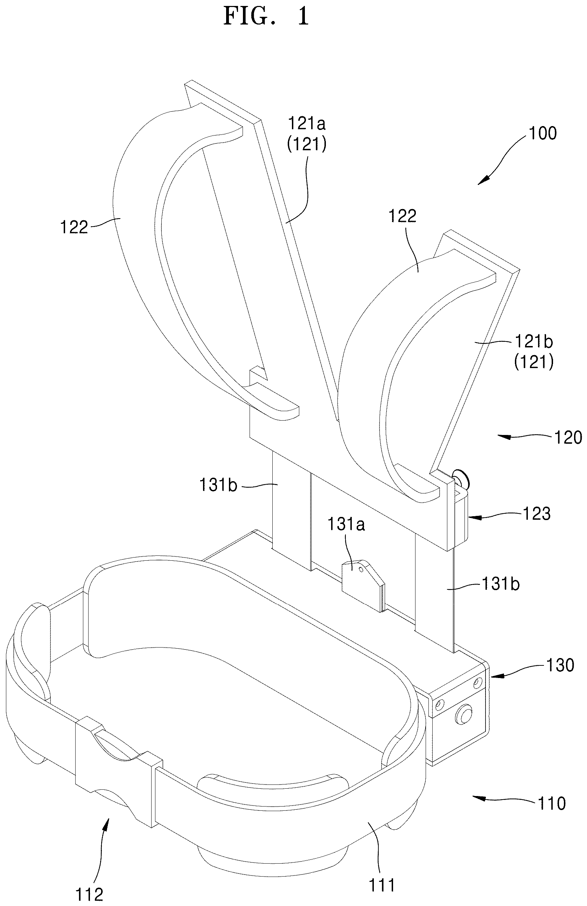

FIG. 1 is a schematic perspective view of a muscle strength-assisting device according to an embodiment.

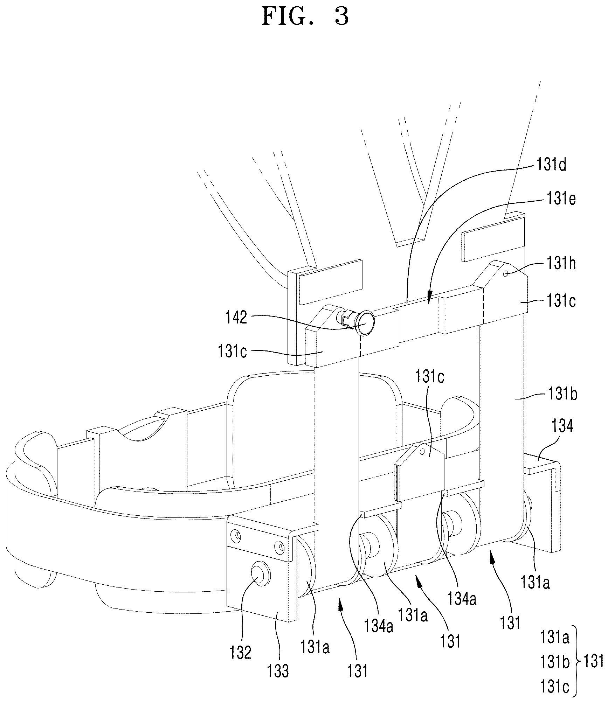

Referring to FIG. 1, a muscle strength-assisting device 100 according to the present disclosure may include a first unit 110 to be worn on a part of a user's body, for example, the waist, in a suit form worn on the body, a second unit 120 to be worn on the user's upper body, and a constant load-generating unit 130 that connects the first unit 110 to the second unit 120, is fixed to the first unit 110, and applies a constant load on the second unit 120. In the embodiments described hereinafter, the constant load-generating unit 130 is shown and described on the premise of including three constant load spring units 131 (FIG. 3), but the number of constant load spring units may be increased or decreased depending on design.

The first unit 110 has a belt form to be worn around the waist and includes a belt 111 for wrapping around the user's waist and a buckle 112 for securing the belt 111 tightened to the waist against loosening. The first unit in the form shown in FIG. 1 may be modified and altered in various forms, and the technical scope of the present disclosure is not limited by these specific forms.

The second unit 120 may be a portion to be worn on the user's upper body and includes an upper frame 121 having two branches 121a, 121b that are joined to each other at the back and shoulder straps 122 for securing the second unit 120 to the user's upper body.

The second unit 120 is shown schematically and, like the first unit 110, may be modified and altered in various forms, however, these changes also do not limit the technical scope of the present disclosure.

The constant load-generating unit 130 is capable of multi-stage load adjustment and may be provided with a plurality of constant load springs, which will be described in detail later.

The constant load-generating unit 130 includes coupling heads 131c that extend from each of the plurality of constant load springs and may move by certain strokes.

The second unit 120 may be provided with a head mount portion 140 to which the coupling heads 131c may be releasably fixed.

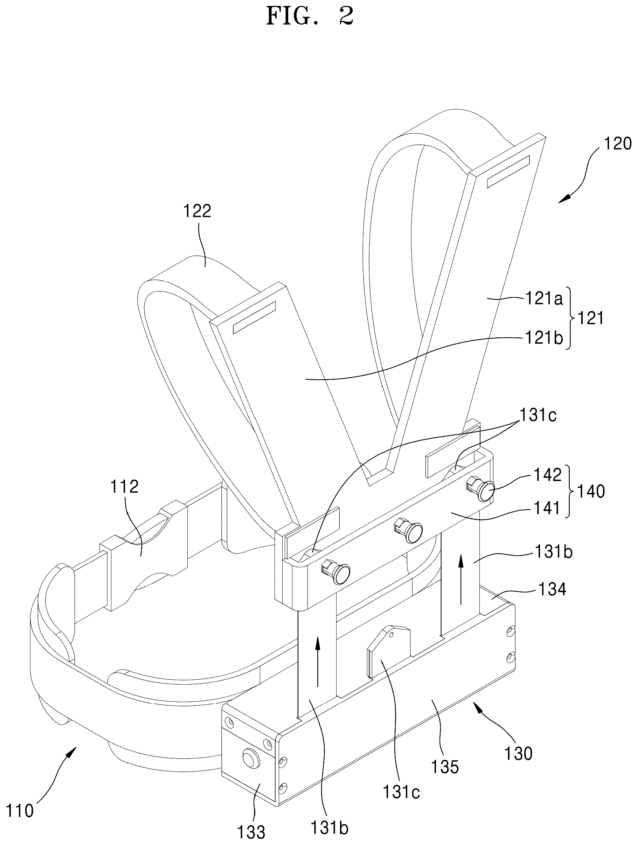

FIG. 2 is a schematic perspective view of the strength-assisting device 100 of the embodiment shown in FIG. 1, as viewed from the back.

Referring to FIG. 2, the constant load-generating unit 130 and the head mount portion 140 may be provided on the back of the strength-assisting device 100 according to the present disclosure.

The constant load-generating unit 130 may be installed on a rear side of the belt 111 in the first unit 110, and the head mount portion 140 may be installed on the upper frame 121 of the second unit 120.

The first unit 110 may be in the form of a buckle-type belt to be worn on the waist and includes the belt 111 that is to be wound around the user's waist and the buckle 112 that holds the belt 111, which is tightened to fit the waist, thereby preventing loosening. The first unit 110 in the form shown in FIG. 1 may be modified and altered in various forms, and the technical scope of the present disclosure is not limited by these specific forms.

The second unit 120 may be the portion to be worn on the user's upper body and may be equipped with the upper frame 121 that is attached at the back, according to an embodiment, the upper frame 121 may have a V-shape with a first branch 121a and a second branch 121b, and the shoulder straps 122 as described above are coupled to each branch. In FIGS. 1 and 2, the second unit 120 is shown schematically, and like the first unit 110, it may be modified and altered in various forms, however this also does not limit the technical scope of the present disclosure.

As described above, the constant load-generating unit 130 is capable of multi-stage load adjustment, in this embodiment, two-stage load adjustment, and may be provided with a plurality of constant load spring units. As described above, the constant load-generating unit 130 may have the coupling head 131c that may move by a certain stroke from a plurality of constant load spring units 131 (FIG. 3).

The second unit 120 may be provided with the head mount portion 140 to which the coupling heads 131c may be releasably fixed.

A coupling bracket 141 of the head mount portion 140 may be provided with a number of locking devices 142 corresponding to the number of constant load springs to be described later, which have reciprocating actuating pins 142a that hold the coupling heads 131c inserted inside the coupling bracket 141, that is, into a coupling space 140c between the coupling bracket 141 and the upper frame 121.

The constant load spring unit may generate a stroke by which a spring extends or retracts during the user's movement of bending, stooping, or straightening the upper body. At this time, the spring generates a constant load, thereby assisting the user's muscle strength, especially when extending, and also helping the user's movement, for example, in a task of lifting an object by applying a constant load in the direction in which the spring retracts in addition to the user's actual muscle strength.

FIG. 3 illustrates a detailed structure of the constant load-generating unit 130. FIG. 3 schematically illustrates a structure in a state in which a spring protection cover 135 and the coupling bracket 141 have been removed, according to an example embodiment, wherein three constant load spring units 131 are arranged side by side in the left and right directions. To help understand the structure, two outer springs 131b on both outer sides are extended from the constant load spring units 131, while a central spring 131b among the springs is fully retracted and positioned closest to the constant load-generating unit 130.

As shown in FIG. 3, the constant load-generating unit 130 has a structure in which three constant load spring units 131 are arranged side by side in the left and right directions. The constant load-generating unit 130 is provided with a shaft 132 for rotatably supporting drums 131a of the constant load spring units 131 around which the springs 131b are wound, a support bracket 133 for supporting the shaft 132, a spring protection cover 135 (FIGS. 1 and 2), and a stop plate 134 for limiting a retraction distance of each of the springs 131b of the constant load spring units 131 and on which the coupling heads 131c at the tips of the springs are caught in a no-load state. The stop plate 134 has slits 134a through which the springs 131b pass, the number of slits corresponding to the number of the spring units 131.

As shown in FIG. 3, the two coupling heads 131c provided at ends of the two outer springs 131b are joined by a bridge 131d thereby forming a single common-coupling head structure, and a middle region of the bridge 131d may be designed to allow the central spring 131b to move independently. To this end, a channel 131e with a low bottom may be formed in the middle region of the bridge 131d through which the central spring 131b and the coupling head 131c may pass or may be seated.

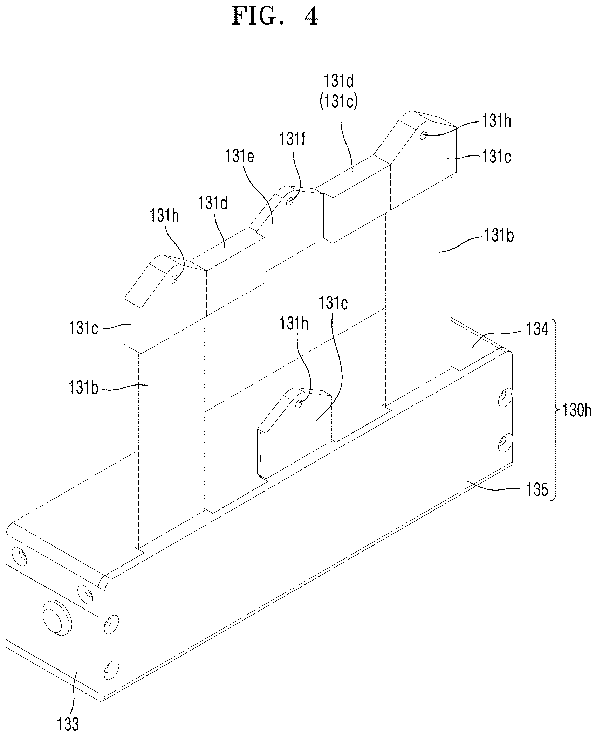

FIG. 4 is a partial perspective view of the constant load-generating unit 130. As shown in FIG. 4, three springs 131b are connected over the housing formed by the support bracket 133, the stop plates 134 above and below it, and the spring protection cover 135. The two outer springs 131b among the three are connected to the two outer coupling heads 131c connected by the bridge 131d, and the central spring 131b has one coupling head 131c independently. In another embodiment, the channel 131e with the low bottom in the middle region of the bridge 131d may provide a seating portion with a bottom shape similar to the central coupling head 131c, and an auxiliary pinhole 131f facing the pinhole 131h of the central coupling head 131c may be provided in the bottom of the seating part. The auxiliary pinhole 131f is a portion into which the end of the central actuating pin 142a enters to ensure more secure holding of the central coupling head 131c.

In FIG. 4, the two outer springs 131b are shown for convenience as being pulled up and the central spring is shown as being freely placed. In the embodiment of FIG. 4, it is possible to apply a constant load in three stages by using the two outer springs, using only a central spring, or using the two outer springs and the central spring together.

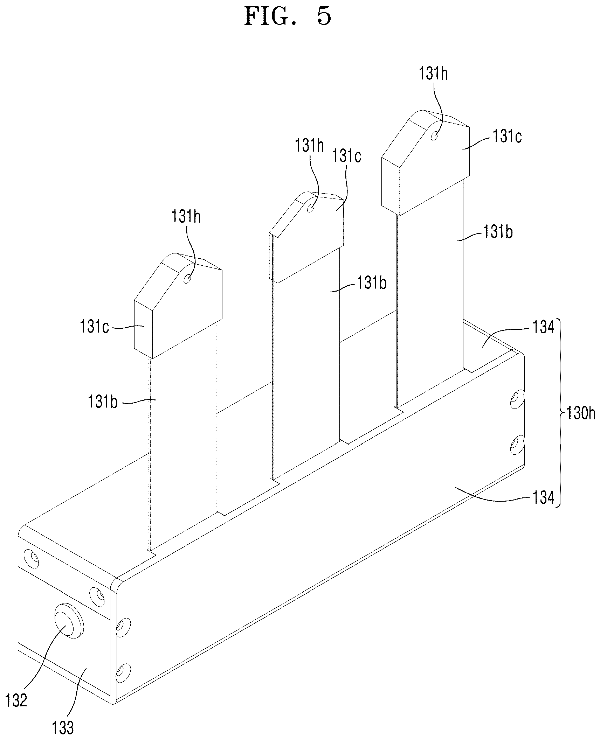

FIG. 5 illustrates a structure in which all three, coupling heads 131c of the springs 131b are provided independently according to another embodiment. This structure allows the springs to be individually coupled to the head mount portion 140, and thus, if necessary, one spring device, two spring devices, or all three spring devices may be connected to the second unit 120, thereby providing three-stage constant loads.

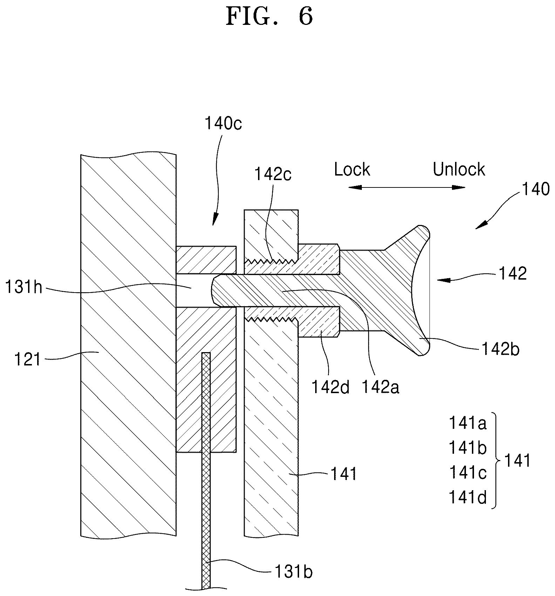

FIG. 6 is a schematic partial cross-sectional view showing a state where one coupling head 131c is coupled to the head mount portion 140.

The coupling head 131c may be inserted inside the coupling bracket 141, that is, into the coupling space 140c between the coupling bracket 141 and the upper frame 121, and may be fixed by the actuating pin 142a of the locking device 142, which is inserted into the pinhole 131h of the head 131c.

The fixed cylindrical body 142c of the locking device 142 may have a screw thread and may be fixed to the coupling bracket 141, and the actuating pin 142a may be installed to be able to reciprocate with respect to the cylindrical body 142c of the locking device 142. The state in which the cylindrical body 142c is screwed into the coupling bracket 141 is secured by a locking nut 142d. Also, a handle 142b may be integrally coupled to an outer end of the actuating pin 142a.

According to another embodiment, the actuating pin 142a may be elastically biased toward the pinhole 131h, and thus, a structure for this elastic bias may be provided in the locking device 142. Therefore, when the coupling head 131c is inserted into the coupling space 140c, the handle 142b is pulled back to retract the actuating pin 142a, and after the coupling head 131c has completely entered, when the actuating pin 142a is released, the actuating pin 142a is inserted into the pinhole 131c' by the elastic biasing force, and the coupling head 131c is locked to the head mount portion 140.

In FIG. 6, the locking device 142 is shown simplified to help understand the basic structure thereof.

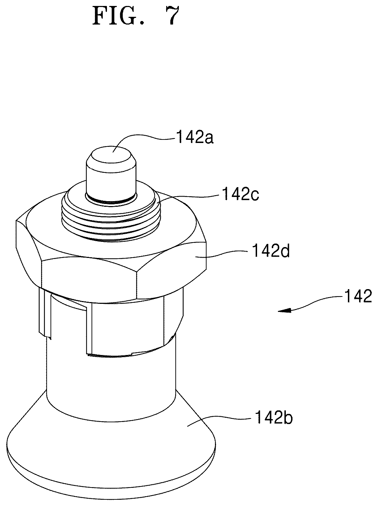

FIG. 7 is an example illustration of a short screw-type index plunger that may be used as the locking device 142 for the coupling head 131c in the present invention.

Referring to FIG. 7, the index plunger used as the locking device 142 in the present embodiment may include an actuating pin 142a which is inserted into the pinhole 131c', the cylindrical body 142c having the screw thread screwed into the coupling bracket 141, the locking nut 142d for securing the state in which the cylindrical body 142c of the locking device 142 is screwed into the coupling bracket 141, and the handle 142b integrally coupled to the actuating pin 142a.

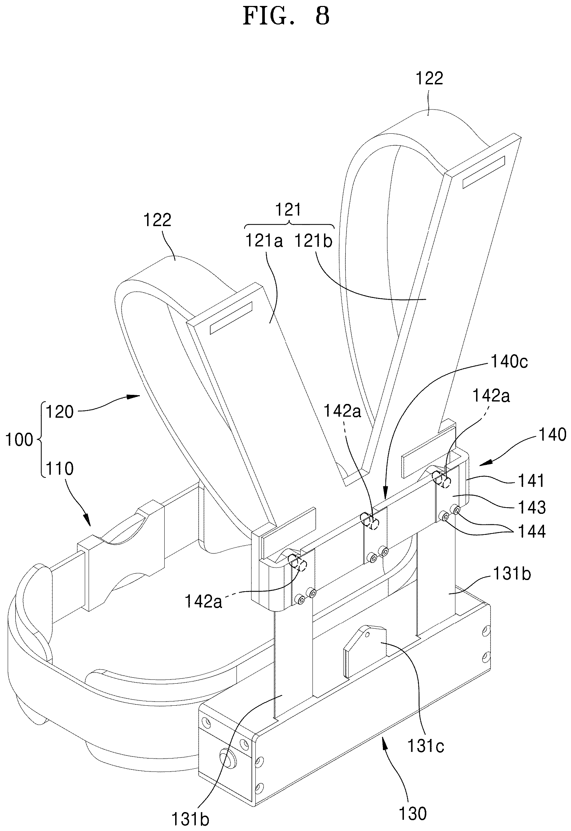

FIG. 8 illustrates the strength-assisting device 100 including the locking device 142 according to another embodiment.

Referring to FIG. 8, the strength-assisting device 100 according to the present disclosure may include the first unit 110 worn on a side part of a user's body, for example, a waist part, the second unit 120 worn on an upper body part of the user's body, and the constant load-generating unit 130 that connects the first unit 110 to the second unit 120, is fixed to the first unit 110, and applies a constant load on the second unit 120.

The first unit 110 has a belt form worn around the waist and includes the belt 111 for wrapping around the waist of a user and the buckle 112 for securing the belt 111 tightened around the waist against loosening. The second unit 120 is the portion worn on the user's upper body and includes an upper frame 121 having two branches 121a, 121b that are joined to each other at the back and the shoulder straps 122 for securing the unit to the user's upper body.

The constant load-generating unit 130 is also capable of multi-stage load adjustment and has the coupling head 131c that extends from the plurality of constant load springs and may move by a certain stroke.

The second unit 120 may be provided with the head mount portion 140 to which the coupling head 131c is releasably fixed.

The coupling bracket 141 of the head mount portion 140 may be provided with the locking device 142 according to another embodiment.

The locking device 142 may include the reciprocating actuating pin 142a that holds the coupling head 131c inserted inside the coupling bracket 141, that is, into the coupling space 140c between the coupling bracket 141 and the upper frame 121, an elastic piece 143 that elastically biases the actuating pin 142a, and the fixing bolt 144 that fixes the elastic piece 143 to the coupling bracket 141.

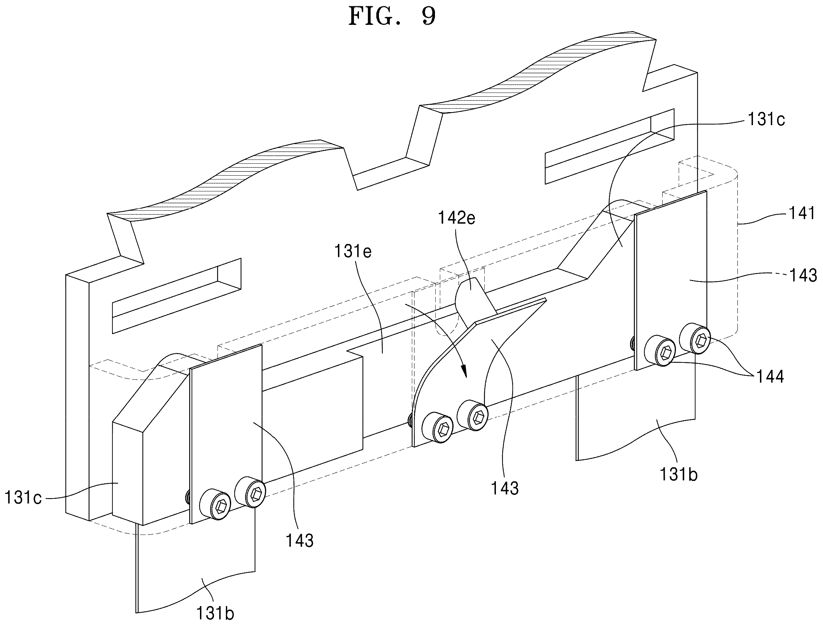

FIG. 9 is a partial perspective view showing the locking device 142 in more detail, in which the coupling bracket 141 to which the locking device 142 is fixed is shown with a dashed line so that the coupling heads 131c, 131d inside may be seen.

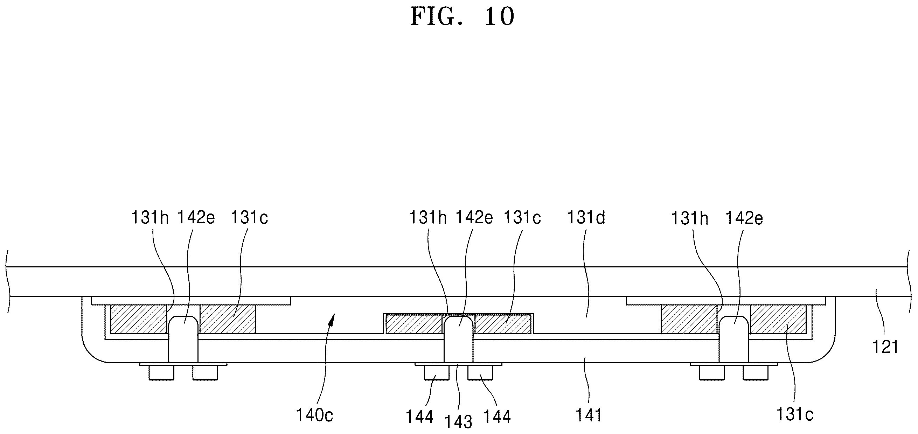

FIG. 10 shows a state in which the actuating pin 142a of the locking device 142 is inserted into pinholes 131c', 131d' of the coupling heads 131c, 131d in the coupling space 140c between the upper frame 121 and the coupling bracket 141, and the coupling heads 131c, 131d are fixed to the head mount portion 140.

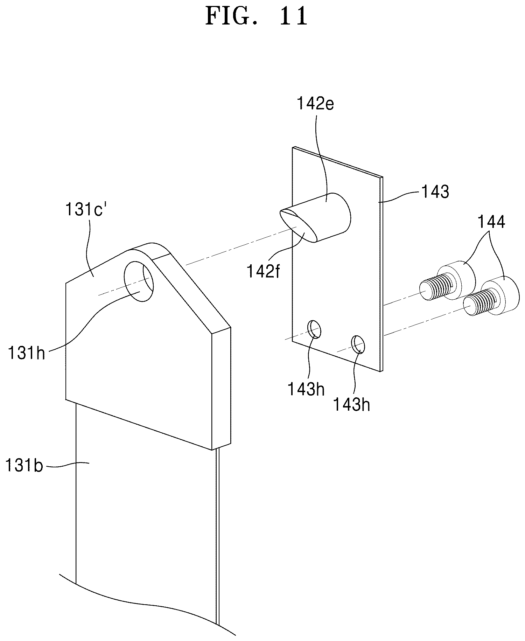

FIG. 11 illustrates a relationship between the actuating pin 142a, the elastic piece 143 for elastically biasing the actuating pin 142a, and the coupling heads 131c, 131d where the actuating pin 142a is inserted.

As shown in FIG. 11, an actuating pin 142e, which is inserted into the pinhole 131h of the coupling heads 131c, 131d, is fixed to one side of one end of the elastic piece 143, and a screw hole into which the fixing bolt 144 is inserted is formed in the other end of the elastic piece.

A slanted cross-section is provided at a tip of the actuating pin 142e to allow the tips of the coupling heads 131c, 131d to rise on when inserted into the coupling space 140c.

When the actuating pin 142a inserted into the pinhole 131h by the elastic piece 143 as described above is released by pulling the elastic piece 143 back, the coupling head 131c may be separated from the head mount portion 140.

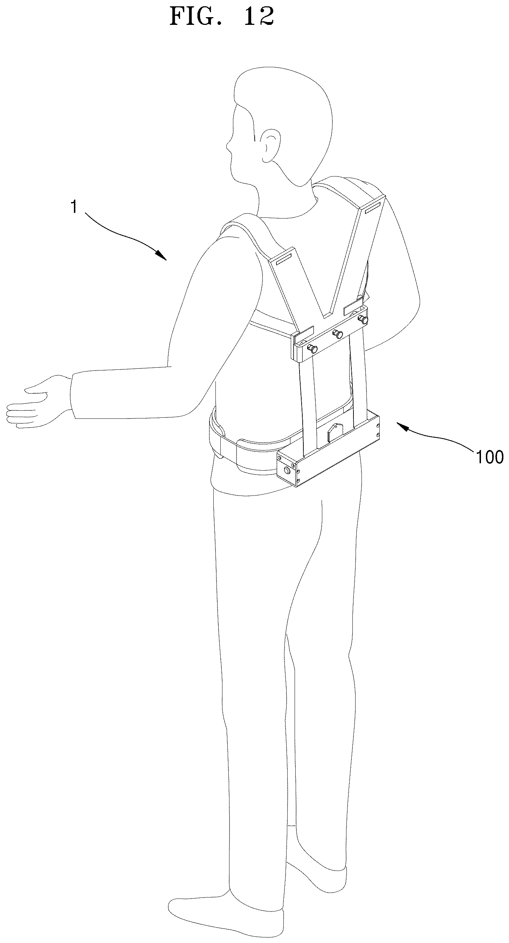

FIG. 12 illustrates a wearing state of the strength-assisting device 100 as described above according to the present disclosure.

The strength-assisting device 100 shown in FIG. 12 includes the plunger-type locking device 142 including the actuating pin 142a, and even in a case where the locking device 142 by the aforementioned elastic spring is used, the same constant load muscle assistance occurs.

As shown in FIG. 12, the first unit may be configured to be worn on the waist, and the second unit may be configured to be worn on the upper body by using the shoulder straps 122 joined at the back of the upper body.

In such a state, when the user 1 bends the upper body, the spring 131b is pulled and extended as the back bends, and at this time the spring 131b of the constant load-generating unit 130 caught in the head mount portion 140 provides a load on the upper body of the user 1 with a constant load. Also, when the upper body is straightened again, the spring 131b retracts with a constant load and provides a constant load on the upper body, which is added to the user's muscle strength for straightening the upper body.

As described above, the constant load is determined by the number of springs 131b that are used, and thus, the constant load may be adjusted in multiple stages according to the user's choice.

The muscle strength-assisting method according to the present disclosure based on the device as described above includes applying, by the first unit worn on the part of the user's body, a constant load on the second unit worn on the other part of the user's body, wherein the constant load-generating unit installed on the first unit applies a constant load on the user in response to a change in a relative distance between the first unit and the second unit or a change in the body shape according to the user's body movement.

The constant load-generating unit generates the constant load in multiple stages by the plurality of springs drawn from the plurality of constant load spring units, and the plurality of springs may transmit the constant load to the second unit through the head mount portion provided on the second unit.

According to one or more embodiments, the constant load-generating unit may apply a multi-stage adjustable constant load on the user's body through the second unit by the plurality of constant load spring units for multi-stage constant load application.

According to one or more embodiments, the constant load spring unit may generate the constant load by at least one selected from the central spring device and the two outer spring devices respectively disposed on both sides of the central spring device.

According to one or more embodiments, the constant load spring unit may generate the constant load by at least one of the central spring device and the two outer spring devices respectively disposed on both sides of the central spring device.

According to the present disclosure, in assisting the user's muscle strength, the muscle strength is assisted with a constant load, thereby preventing the user's discomfort or accidents due to a sudden change in load. In particular, by generating a multi-stage strength assisting force, wide use is allowed by adjusting the load according to the user's needs.

Thus, although various embodiments of the present invention have been described in detail above, it will be understood by those of ordinary skill in the art that various modifications and changes may be made thereto without departing from the spirit and scope of the invention as defined in the appended claims. Therefore, future changes to the embodiments of the present invention will not depart from the technology of the present invention.

## Claims

1. A strength-assisting device comprising:
a first unit configured to be worn on a part of a user's body;
a second unit configured to be worn on another part of the user's body; and
a constant load-generating unit equipped with a constant load spring unit that is installed on the first unit and applies constant loads on the second unit.

2. The strength-assisting device of claim 1, wherein the constant load-generating unit includes a plurality of constant load spring units for applying a multi-stage constant load, and a coupling head configured to be selectively coupled to the second unit is provided at one end of each spring of the plurality of constant load spring units.

3. The strength-assisting device of claim 2, wherein the plurality of constant load spring units include a central spring unit and two outer spring units respectively disposed on both sides of the central spring unit.

4. The strength-assisting device of claim 3, wherein the two coupling heads provided at the ends of springs of the two outer spring units, respectively, are interconnected to each other by a bridge.

5. The strength-assisting device of claim 4, wherein a channel through which the coupling head of the central spring is placed or passes is formed in the bridge.

6. The strength-assisting device of claim 5, wherein a seating portion to which the coupling head of the central spring is fixed is formed in the channel.

7. The strength-assisting device of any one of claims 1 to 6, wherein the first unit is provided with a head mount portion equipped with a coupling bracket that provides a coupling space into which the coupling head is inserted with respect to a frame of the first unit, the coupling head being releasably fixed to the head mount portion, and the coupling bracket is provided with a locking device configured to perform, by an actuating pin, pin fixation of the coupling head provided on each of the springs.

8. The strength-assisting device of claim 7, wherein the locking device includes a plunger-type locking device having a cylindrical body fixed to the coupling bracket, an actuating pin that reciprocates with respect to the cylindrical body, and a handle connected to the actuating pin.

9. The strength-assisting device of claim 7, wherein the locking device includes a plunger-type locking device having an elastic piece that elastically biases an actuating pin of a reciprocating type to releasably fix the coupling head by pin fixation.

10. The strength-assisting device of claim 9, wherein the first unit is mounted on a user's waist, and the second unit is mounted on a user's upper body.

11. A method of assisting a user's muscle strength with a strength- assisting device, the strength-assisting device comprising:
a first unit configured to be worn on a part of a user's body;
a second unit configured to be worn on another part of the user's body; and
a constant load-generating unit equipped with a constant load spring unit that is installed on the first unit and applies a constant load on the second unit,
the method comprising:
applying, by the first unit worn on the part of a user's body, the constant load on the second unit worn on the other part of the user's body, wherein the constant load-generating unit installed on the first unit applies the constant load on the user in response to a change in a relative distance between the first unit and the second unit or a change in a body shape according to the user's body movement.

12. The method of claim 11, wherein the constant load-generating unit is configured to generate the constant load in multiple stages by a plurality of springs drawn from a plurality of constant load spring units, and the plurality of springs transmit the constant load to the second unit through a head mount portion provided on the second unit.

13. The method of claim 12, wherein the constant load-generating unit is configured to apply a multi-stage adjustable constant load on the user's body through the second unit by the plurality of constant load spring units for multi-stage constant load application.

14. The method of claim 11, wherein the constant load-generating unit is configured to apply a multi-stage adjustable constant load on the user's body through the second unit by a plurality of constant load spring units for multi-stage constant load application.

15. The method of claim 14, wherein the constant load spring unit is configured to generate the constant load by at least one selected from a central spring unit and two outer spring units respectively disposed on both sides of the central spring unit.

16. The method of claim 15, wherein the first unit is configured to apply the constant load on the user's upper body, and the second unit is configured to fix the constant load-generating unit that generates the constant load to the user's waist.

17. The method of claim 11, wherein the constant load spring unit is configured to generate the constant load by at least one selected from a central spring unit and two outer spring units respectively disposed on both sides of the central spring unit.

18. The method of claim 12, wherein the constant load spring unit is configured to generate the constant load by at least one selected from a central spring unit and two outer spring units respectively disposed on both sides of the central spring unit.

## Amended claims

### Amended claims under Art. 19.1 PCT

1. A strength-assisting device comprising:
a first unit configured to be worn on a part of a user's body;
a second unit configured to be worn on another part of the user's body; and
a constant load-generating unit which, being installed on the first unit, applies constant loads to the second unit and includes a plurality of constant load spring units each having a spring connected to the second unit,
wherein a coupling head configured to be coupled to the second unit is provided at one end of each spring of the plurality of constant load spring units.

2. The strength-assisting device of claim 1, wherein the constant load-generating unit is configured to provide a multi-stage constant load, and the one end of each spring of the plurality of constant load spring units is configured to be selectively coupled to the second unit.

3. The strength-assisting device of claim 1, wherein the plurality of constant load spring units include a central spring unit and two outer spring units disposed on both sides of the central spring unit.

4. The strength-assisting device of claim 3, wherein the two coupling heads provided at the spring ends of the two outer spring devices, respectively, are interconnected by a bridge.

5. The strength-assisting device of claim 4, wherein a channel through which the coupling head of the central spring is placed or passes is formed in the bridge.

6. The strength-assisting device of claim 5, wherein a seating portion to which the coupling head of the central spring is fixed is formed in the channel.

7. The strength-assisting device of claim 1, wherein the first unit is provided with a head mount portion equipped with a coupling bracket that provides a coupling space into which the coupling head is inserted with respect to a frame of the first unit, the coupling head being releasably fixed to the head mount portion, and
the coupling bracket is provided with a locking device configured to perform, by an actuating pin, pin fixation of the coupling head provided on each of the springs.

8. The strength-assisting device of claim 7, wherein the locking device includes a plunger-type locking device having a cylindrical body fixed to the coupling bracket, an actuating pin that reciprocates with respect to the cylindrical body, and a handle connected to the actuating pin.

9. The strength-assisting device of claim 7, wherein the locking device is a plunger-type locking device having an elastic piece that elastically biases the actuating pin of a reciprocating type to releasably fix the coupling head by pin fixation.

10. The strength-assisting device of claim 9, wherein the first unit is mounted on a user's waist, and the second unit is mounted on a user's upper body.

11. A method of assisting a user's muscle strength with a muscle strength-
assisting device,
the muscle strength-assisting device comprising:
a first unit configured to be worn on a part of a user's body;
a second unit configured to be worn on another part of the user's body; and
a constant load-generating unit which, being installed on the first unit, applies a constant load to the second unit and includes a plurality of constant load spring units each having a spring connected to the second unit,
wherein a coupling head configured to be coupled to the second unit is provided at one end of each spring of the plurality of constant load spring units,
the method comprising:
applying, by the first unit worn on the part of a user's body, the constant load on the second unit worn on the other part of the user's body, wherein the constant load-generating unit installed on the first unit applies, by using the plurality of constant load spring units, the constant load to the user in response to a change in a relative distance between the first unit and the second unit or a change in a body shape according to the user's body movement.

12. The method of claim 11, wherein one end of each spring of the constant load spring units configured to selectively coupled to the second unit, and the constant load-generating unit is configured to generate a multi-stage constant load by the plurality of constant load springs drawn from the plurality of constant load spring units, and the plurality of springs transmit the constant load to the second unit through a head mount portion provided on the second unit.

13. The method of claim 12, wherein the constant load-generating unit is configured to apply a multi-stage adjustable constant load on the user's body through the second unit by the plurality of constant load spring units for multi-stage constant load application.

14. The method of claim 11, wherein the constant load-generating unit is configured to apply a multi-stage adjustable constant load on the user's body through the second unit by the plurality of constant load spring units for multi-stage constant load application.

15. The method of claim 14, wherein the constant load spring unit is configured to generate the constant load by at least one selected from a central spring unit and two outer spring units respectively disposed on both sides of the central spring unit.

16. The method of claim 15, wherein the first unit is configured to apply the constant load on the user's upper body, and the second unit is configured to fix the constant load-generating unit that generates the constant load to the user's waist.

17. The method of claim 11, wherein the constant load spring unit is configured to generate the constant load by at least one selected from a central spring unit and two outer spring units respectively disposed on both sides of the central spring unit.

18. The method of claim 12, wherein the constant load spring unit is configured to generate the constant load by at least one selected from a central spring unit and two outer spring units respectively disposed on both sides of the central spring unit.
